# EUROPEAN PATENT APPLICATION

(11) **EP 4 793 779 A1**
(43) Date of publication of application: **19.08.2026**
(21) Application number: 26156575.8
(22) Date of filing: 05.02.2026
(51) Int. Cl.: G06F 11/3668

(54) **METHOD FOR AI-DRIVEN DESCRIPTIVE TEST CASE GENERATION FROM NATURAL LANGUAGE REQUIREMENTS**

(30) Priority: 13.02.2025 IN 202511012255; 13.01.2026 US 202619447204
(71) Applicant: General Electric Company, Cincinnati, Ohio 45215 (US)
(72) Inventor: ARAMANEKOPPA, Sharath Sridhar, 560066 Bengaluru (IN); BOBADE, Parag Suhas, 560066 Bengaluru (IN); MULWAD, Varish, 560066 Bengaluru (IN); BHOWMICK, Rajat Subhra, 560066 Bengaluru (IN)
(74) Representative: Openshaw & Co.

(57) **Abstract**

An apparatus may include a control circuit (102) to: access textual requirements (106) for aviation software (104), input the textual requirements for the aviation software to a first machine learning model (108), output test case input and execution conditions from the first machine learning model, input the textual requirements and the test case input and execution conditions to a second machine learning model (110) that is different from the first machine learning model, output expected test results from the second machine learning model, and form at least one test case (112) for the aviation software using the test case input, execution conditions, and expected test results.

## Description

### CROSS-REFERENCE TO RELATED APPLICATIONS

This application claims priority to Indian Provisional Application No. 202511012255 filed February 13, 2025, which is incorporated herein by reference.

### TECHNICAL FIELD

These teachings relate generally to test cases for aviation software.

### BACKGROUND

Generating test cases is often a key step in requirements engineering processes. Test cases are generated with varying levels and types of requirements and are used to verify functionality of aviation software (such as engine control software for an aircraft or alternate vehicle).

### BRIEF DESCRIPTION OF DRAWINGS

Various needs are at least partially met through provision of the apparatus and method for facilitating automatically generated test cases for aviation software described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 illustrates a block diagram as configured in accordance with various embodiments of these teachings;
FIG. 2 illustrates a flow diagram as configured in accordance with various embodiments of these teachings;
FIG. 3 illustrates a block diagram as configured in accordance with various embodiments of these teachings;
FIG. 4 illustrates a block diagram as configured in accordance with various embodiments of these teachings;
FIG. 5 illustrates a block diagram as configured in accordance with various embodiments of these teachings;
FIG. 6A illustrates a block diagram as configured in accordance with various embodiments of these teachings;
FIG. 6B illustrates a block diagram as configured in accordance with various embodiments of these teachings;
FIG. 6C illustrates a block diagram as configured in accordance with various embodiments of these teachings;
FIG. 7 illustrates a block diagram as configured in accordance with various embodiments of these teachings;
FIG. 8 illustrates a block diagram as configured in accordance with various embodiments of these teachings; and
FIG. 9 illustrates a block diagram as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Reference now will be made in detail to illustrative examples consistent with the present disclosure, one or more examples of which are illustrated in the drawings. Each example is provided by way of explanation of the present disclosure, not limitation of the disclosure. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

Pursuant to present teachings, current methods of test case generation for requirements engineering processes are manual, cumbersome, can be inaccurate, and require significant amounts of time. These are all significant challenges in the context of aviation application settings.

Generally speaking, various aspects of the present teachings can be employed with systems, methods, apparatuses, and the like to facilitate automatically generating test cases for aviation software. In some aspects, a control circuit accesses textual requirements for the aviation software. The control circuit inputs the textual requirements for the aviation software into a first machine learning model, and outputs test case input and execution conditions from the first machine learning model. The control circuit inputs the textual requirements and the test case input and execution conditions to a second machine learning model that is different from the first machine learning model, and outputs expected test results from the second machine learning model. The control circuit forms at least one test case for the aviation software using the test case input, execution conditions, and expected results. By one approach, the present disclosure provides an automated solution to author test cases by parsing natural language requirements. By one approach, various aspects of the present disclosure utilize machine learning models for identifying a requirement type, extracting input and execution conditions from requirement text, and extracting expected results from requirement text.

By one approach, the present teachings provide an automated solution to author test cases by parsing natural language requirements written in English using AI models fine-tuned to automatically identify a requirement type, to extract input and execution conditions from requirement text, and to extract expected results from requirement text. Specifically, the automated aspects described decrease the time and complexity required during test case generation.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

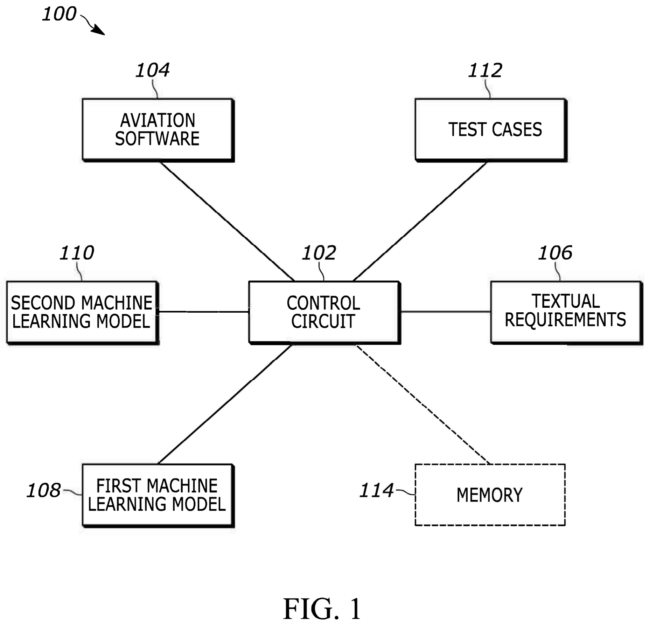

These and other benefits may become clearer upon making a thorough review and study of the following detailed description. Referring now to the drawings, and in particular to FIG. 1, an illustrative apparatus 100 that is compatible with many of these teachings will first be presented.

In this particular example, the enabling apparatus 100 includes a control circuit 102. Being a "circuit," the control circuit 102 therefore comprises structure that includes at least one (and typically many) electrically-conductive paths (such as paths comprised of a conductive metal such as copper or silver) that convey electricity in an ordered manner, which path(s) will also typically include corresponding electrical components (both passive (such as resistors and capacitors) and active (such as any of a variety of semiconductor-based devices) as appropriate) to permit the circuit to effect the control aspect of these teachings.

Such a control circuit 102 can comprise a fixed-purpose hard-wired hardware platform (including but not limited to an application-specific integrated circuit (ASIC) (which is an integrated circuit that is customized by design for a particular use, rather than intended for general-purpose use), a field-programmable gate array (FPGA), and the like) or can comprise a partially or wholly-programmable hardware platform (including but not limited to microcontrollers, microprocessors, and the like). These architectural options for such structures are well known and understood in the art and require no further description here. This control circuit 102 is configured (for example, by using corresponding programming as will be well understood by those skilled in the art) to carry out one or more of the steps, actions, and/or functions described herein.

It will be appreciated that the control circuit 102 may comprise a single integrated platform or may comprise a plurality of such circuits that work in cooperation with one another.

The control circuit 102 can communicate with and/or execute aviation software 104 in accordance with some embodiments. By one approach, the aviation software 104 includes computer readable instructions executable by the control circuit 102. By one approach, the aviation software 104, when executed, controls an aircraft and/or aircraft operations. In some forms, the aviation software 104 includes engine control software. By one approach, the aviation software 104 is related to aircraft requirements, and the apparatus 100 generates test cases 112 for testing the aviation software 104. By one approach, the test cases 112 are used to verify the functionality of the aviation software 104 prior to implementation of the aviation software 104 outside of a testing environment (for example, for operational use with an aircraft). In other words, the test cases 112 are used to determine if the aviation software 104 is functional to regulate an aircraft based on aircraft requirements. It is generally contemplated that the apparatus 100 may be used in conjunction with alternative automotive software and/or vehicles (for example, spacecraft, automobiles, and so forth).

In this example, the control circuit 102 operably couples to a first machine learning model 108 and/or a second machine learning model 110. A machine learning model is a computational algorithm designed to perform specific tasks by learning from data, without being explicitly programmed with predetermined rules. Machine learning models identify patterns and make decisions based on the input data they are trained on, which can include a wide array of sources such as images, text, or numerical values. Models typically undergo a process called training, where the model is exposed to large datasets and adjusts its internal parameters to minimize errors in its predictions or classifications. Once adequately trained, the model can generalize from its training to make accurate inferences on new, unseen data, effectively automating complex decision-making processes.

The machine learning models 108, 110 may be integral to the control circuit 102 or can be physically discrete (in whole or in part) from the control circuit 102 as desired. The machine learning models 108, 110 can also be local with respect to the control circuit 102 (where, for example, both share a common circuit board, chassis, power supply, and/or housing) or can be partially or wholly remote with respect to the control circuit 102 (where, for example, the machine learning models 108, 110 are physically located in another facility, metropolitan area, or even country as compared to the control circuit 102). As with the control circuit 102, the machine learning models 108, 110 may comprise a singular structure or may comprise a plurality of machine learning platforms.

The machine learning models 108, 110 may be trained using any suitable machine learning algorithm(s) including decision trees, random forest, neural networks, deep learning, and so forth. In the present embodiment, the machine learning models 108, 110 are operatively coupled with the control circuit 102 (for example, via a network interface), and the control circuit 102 may execute machine learning models 108, 110. By one approach, instructions stored in memory (such as the memory 114 described herein) may cause the control circuit 102 to output information and/or data to be used by the machine learning models 108, 110. The machine learning models 108, 110 are generally pre-trained with data, and in some embodiments may be re-trained by any combination of manually input re-training data and/or self-learning methods. By one approach, the machine learning models 108, 110 are large language models (LLMs). By one approach, the LLMs may be trained by third parties and reside and execute in a third party cloud server environment. By one approach, the machine learning models 108, 110 may be downloaded from third parties and trained using data specific to the apparatus 100 and executed on server(s) controlled by the apparatus 100 developer. In some aspects, the machine learning models 108, 110 are stored in respective machine readable mediums executable by respective control circuits, while in some aspects the machine learning models 108, 110 are stored in the same machine readable medium and are executed by the same control circuit (such as the control circuit 102).

In this illustrative example, the first machine learning model 108 and the second machine learning model 110 are distinct and each perform respective steps and/or functions described herein. For example, in some aspects, the first machine learning model 108 includes a general large language model that has been fine-tuned using existing test cases 112 for aviation software 104. The general large language model has been fine-tuned by selectively modifying weighting of particular input/output combinations in accordance with these teachings. In some embodiments, at least some of the existing test cases 112 for aviation software 104 include test cases 112 that were vetted and approved as complying with at least one test case requirement (which may be indicated in the textual requirements 106). The test case requirements may include a governmental-sourced test case requirement (such as Radio Technical Commission for Aeronautics (RTCA) requirements, Aerospace Recommended Practice (ARP) 4786 requirements, R16C and B handbook requirements, Military Handbook (Mil-hdbk)-516C requirements, Software Considerations in Airborne Systems and Equipment Certification (DO-178C) requirements, ARP4754A requirements, and so forth) which may include an aerospace industry certification requirement in accordance with some approaches. By one approach, the test case requirements may be customizable based on user input, type of aircraft, or type of aircraft operation.

In some embodiments, the second machine learning model 110 includes a general large language model that has been fine-tuned to account for a context of testing conditions. In some aspects, the second machine learning model 110 includes a general large language model that has been fine-tuned to ensure that output expected test results from the second machine learning model 110 accord with output expected results from existing test cases 112 used to further train the second machine learning model 110. By one approach, the training and/or fine-tuning of the machine learning models 108, 110 does not need to include all possible or otherwise available requirements, and a subset may be selected instead for use in a particular setting. In one example, the particular setting may be AND requirement class examples, and the selected subset of requirements includes AND classified existing textual requirements 106 and corresponding existing test cases 112. By one approach, a training subset of requirements can include 1,000 discrete requirements and corresponding existing test cases 112 for the aviation software 104. By one approach, for a given requirement, five training test cases 112 are utilized to train the machine learning models 108, 110. By one approach, between five and ten training test cases 112 are utilized to train the machine learning models 108, 110. If desired, even more training test cases 112 (such as 25, 50, 100, and so forth) can be utilized to train the machine learning models 108, 110 for one or more of the requirements as appropriate.

The control circuit 102 may operably couple to a memory 114. This memory 114 may be integral to the control circuit 102 or can be physically discrete (in whole or in part) from the control circuit 102 as desired. This memory 114 can also be local with respect to the control circuit 102 (where, for example, both share a common circuit board, chassis, power supply, and/or housing) or can be partially or wholly remote with respect to the control circuit 102 (where, for example, the memory 114 is physically located in another facility, metropolitan area, or even country as compared to the control circuit 102). As with the control circuit 102, the memory 114 may comprise a singular structure or may comprise a plurality of memory platforms that collectively comprise the "memory" of this apparatus 100.

This memory 114 can serve, for example, to non-transitorily store the computer instructions that, when executed by the control circuit 102, cause the control circuit 102 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as a dynamic random access memory (DRAM).)

In some aspects, the control circuit 102 can access and/or retrieve textual requirements 106 (sometimes also referred to herein as requirement text and/or target requirements) for the aviation software 104. Examples of suitable textual requirements 106 are described in further detail herein. By one approach, the textual requirements 106 are stored in any combination of memory (such as the memory 114), database(s), and the like. Examples of suitable databases include hierarchical databases, relational databases, non-relational databases, object-oriented databases, and so forth. The textual requirements 106 are generally textual inputs associated with the aviation software 104. Sources of textual requirements 106 may include user input textual requirements 106 regarding aircraft and/or aircraft operation requirements. By one approach, textual requirements 106 are manually generated (for example, by a user), while in some aspects, textual requirements 106 are generated automatically (for example, by relevant software, code, machine learning models, and the like). In some aspects, the textual requirements 106 are input to the machine learning models 108, 110 such that the textual requirements 106 prompt the machine learning models 108, 110 to perform various steps and/or functions described herein. By one approach, there are 1,000 different discrete requirements for the aviation software 104. By one approach, there are 5,000 different discrete requirements for the aviation software 104. By one approach, there are 10,000 different discrete requirements for the aviation software 104. These teachings may of course accommodate any number of different discrete requirements, including numbers less than, in between, and greater than the specific examples shown immediately above.

By one optional approach, the control circuit 102 also operably couples to a user interface (not shown). This user interface can comprise any of a variety of user-input mechanisms (such as, but not limited to, keyboards and keypads, cursor-control devices, touch-sensitive displays, speech-recognition interfaces, gesture-recognition interfaces, and so forth) and/or user-output mechanisms (such as, but not limited to, visual displays, audio transducers, printers, and so forth) to facilitate receiving information and/or instructions from a user and/or providing information to a user.

If desired, the control circuit 102 can also operably couple to a network interface (not shown). So configured the control circuit 102 can communicate with other elements (both within the apparatus 100 and external thereto) via the network interface. Network interfaces, including both wireless and non-wireless platforms, are well understood in the art and require no particular elaboration here.

In some aspects, the control circuit 102 accesses the textual requirements 106 for the aviation software 104. The control circuit 102 inputs the textual requirements 106 for the aviation software 104 to the first machine learning model 108 and outputs test case input and execution conditions from the first machine learning model 108 in accordance with these teachings. The input is generally what parameter is to be varied in execution. For example, an input condition may indicate an engine state being ON or OFF (such that the execution condition is ON or OFF and the input is engine state). The control circuit 102 inputs the textual requirements 106 and the test case input and execution conditions to the second machine learning model 110 and outputs expected test results from the second machine learning model 110 in accordance with at least some embodiments. By one approach, the control circuit 102 forms at least one test case 112 for the aviation software 104 using the test case input, execution conditions, and expected test results.

The control circuit 102 may further output the at least one test case 112 for execution by the aviation software 104. The control circuit 102 may execute the generated test case 112 by the aviation software 104, obtain results based on executing the generated test case 112, and determine whether the textual requirement for the aviation software 104 is satisfied based on the obtained results.

For example, in some implementations, the control circuit 102 may generate a virtual environment, initiate an instance of a currently being tested version of the aviation software 104 in the virtual environment, execute the test case 112 in the initiated instance of the aviation software 104, and determine whether the executed test case 112 generated the expected result. If the expected result is not generated by the test case 112, the control circuit 102 may generate an alert indicating that a particular textual requirement 106, corresponding to the test case 112, is not currently satisfied by the aviation software 104. The alert may be displayed on an output device in communication with the control circuit 102 or sent to another device in communication with the control circuit 102, such as, for example, a user device associated with an operator managing the testing of the aviation software 104. In other implementations, the control circuit 102 may test the aviation software 104 in-situ (e.g., on an instance of the aviation software 104 installed in an aircraft, etc.) by sending a control signal to temporarily disable the aviation software 104 from activating actuators of an aircraft while the test case 112 is being executed and/or by intercepting any output generated by the aviation software 104 during the execution of the test case 112. If the expected result is not generated by the test case 112, the control circuit 102 may maintain a disabled state for a particular functionality of the aviation software 104 until the test case 112 is updated and generates the expected result. Additionally, or alternatively, the control circuit 102 may send a control signal to the machine learning model test case generator 902 to update the test case 112. In response, the machine learning model test case generator 902 may perform an update based on the received control signal.

If the expected result is generated by the test case 112, the control circuit 102 may generate an indication that the particular textual requirement 106, corresponding to the test case 112, is satisfied by the aviation software 104. In other implementations, the control circuit 102 may test the aviation software 104 in-situ (e.g., on an instance of the aviation software 104 installed in an aircraft, etc.) by sending a control signal to temporarily disable the aviation software 104 from activating actuators of an aircraft while the test case 112 is being executed and/or by intercepting any output generated by the aviation software 104 during the execution of the test case 112. If the expected result is generated by the test case 112, the control circuit 102 may cease a disabled state for a particular functionality of the aviation software 104 that is associated with the test case 112. Additionally, the control circuit 102 may send a message to the output device in communication with the control circuit 102, and/or to the user device associated with the operator managing the testing of the aviation software 104, indicating that the test case 112 is generating the expected result. Furthermore, the control circuit 102 may send a control signal to the machine learning model test case generator 902, indicating that the test case 112 has generated the expected result. In response, the machine learning model test case generator 902 may perform an update based on the received control signal.

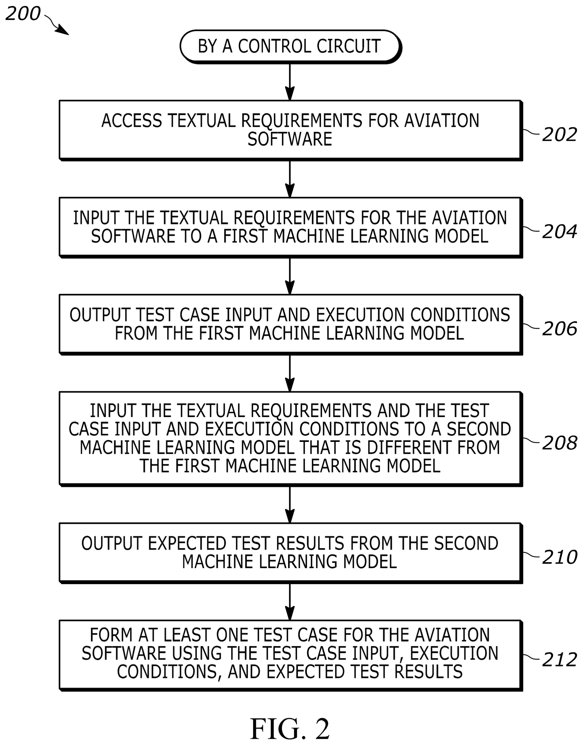

Furthermore, in some implementations, the control circuit 102 may be in communication with another device or system and may provide the results generated by the test case 112 to the other device or system. For example, the control circuit 102 may provide the results of the test case 112 to a flight control simulator system that includes a hardware-in-the-loop (HIL) simulator, to an avionics test bench that includes a physical test rig for avionics equipment, to an environmental simulation device that simulates conditions such as altitude, temperature, and/or pressure during flight, and/or to an aircraft sensor emulator that injects sensor data into an aircraft system under test. FIG. 2 illustrates a method 200 in accordance with these teachings. It is generally contemplated that the method 200 is performed by the apparatus 100 and/or components of the apparatus 100 (such as the control circuit 102, the first machine learning model 108, the second machine learning model 110, and so forth). In some aspects, a control circuit performs the method 200 and steps thereof.

Beginning at step 202, the method 200 includes accessing textual requirements for aviation software. In some aspects, the textual requirements include at least five hundred different and discrete requirements for the aviation software. By one approach, the aviation software includes engine control software.

At step 204, the method 200 includes inputting the textual requirements for the aviation software to a first machine learning model. At step 206, the method 200 includes outputting test case input and execution conditions from the first machine learning model. In some aspects, the first machine learning model includes a general large language model that has been fine-tuned using existing test cases for aviation software. The general large language model may be fine-tuned by selectively modifying weighting of particular input/output combinations in accordance with these teachings. In some aspects, at least some of the existing test cases for aviation software includes test cases that were vetted and approved as complying with at least one test case requirement. In some examples, the at least one test case requirement includes a governmental-sources test case requirement, and the governmental-sourced test case requirement includes an aerospace industry certification requirement.

At step 208, the method 200 includes inputting the textual requirements and the test case input and execution conditions to a second machine learning model that is different from the first machine learning model. At step 210, the method 200 includes outputting expected test results from the second machine learning model. In some aspects, the second machine learning model includes a general large language model that has been fine-tuned to account for a context of testing conditions. By one approach, the second machine learning model includes a general large language model that has been fine-tuned to ensure that outputted expected test results accord with outputted expected results from test cases used to further train the second machine learning model.

At step 212, the method 200 includes forming at least one test case for the aviation software using the test case input, execution conditions, and expected test results.

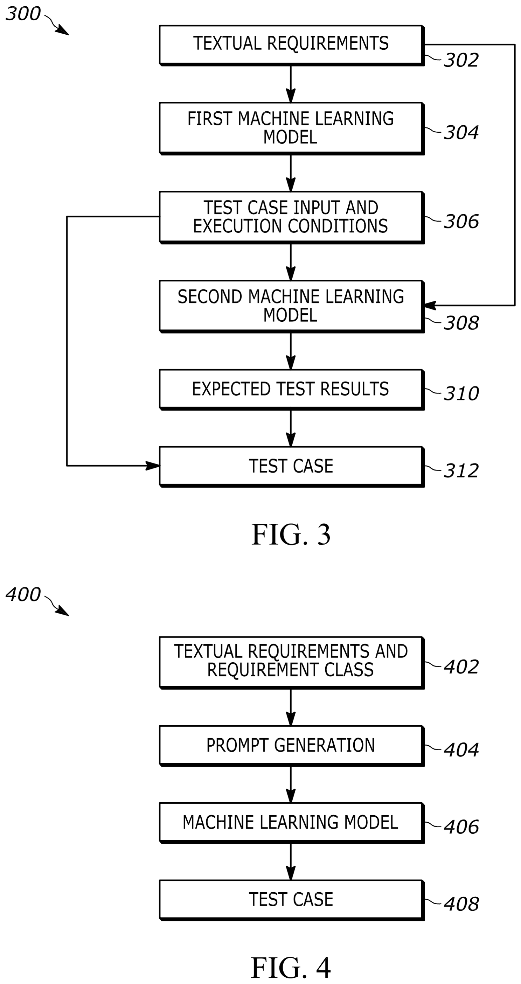

Further referring to FIG. 3, a system 300 is shown in accordance with some embodiments. It is generally contemplated that the system 300 may utilize the apparatus 100 and/or components of the apparatus 100 and/or may include steps of the method 200 described herein. For example, the first machine learning model 304 and the second machine learning model 308 may be the same as the first machine learning model 108 and the second machine learning model 110, respectively, and no further elaboration of repeated components will be provided here for the sake of brevity.

As shown in FIG. 3, the system 300 includes inputting textual requirements 302 into a first machine learning model 304. The first machine learning model 304 processes the textual requirements 302 and extracts test case input and execution conditions 306. (Some specific illustrative examples are provided in detail further herein.) The test case input and execution conditions 306 in some aspects include what is to be altered for a respective component (for example, by the aviation software 104 for an aircraft component).

The second machine learning model 308 receives the textual requirements 302 and the test case input and execution conditions 306. The test case input and execution conditions 306 are generally used as additional context along with the textual requirements 302 by the second machine learning model 308 to extract expected test results 310. The test case input and execution conditions 306 and expected test results 310 are then processed (for example, by a machine learning model) to generate test cases 312.

Further referring to FIG. 4, a system 400 is shown in accordance with some embodiments. It is generally contemplated that the system 400 may utilize the apparatus 100 and/or components of the apparatus 100 and/or may include steps of the method 200 described herein. For example, machine learning model 406 may be the same as the first machine learning model 108 and/or the second machine learning model 110 and no further elaboration of repeated components is required.

As shown in FIG.4, the system 400 includes textual requirements and requirement class 402 (sometimes also referred to herein as requirement type) which are input into a prompt generation model 404. Examples of suitable requirement classes 402 include initialization, adjustment, constants, AND, OR, IF-THEN, latches, timers, and so forth. In some aspects, the prompt generation model 404 includes any suitable machine readable instructions, software, machine learning model, and so forth. Appropriate prompts generated are then input into the machine learning model 406 in order to generate test cases 408.

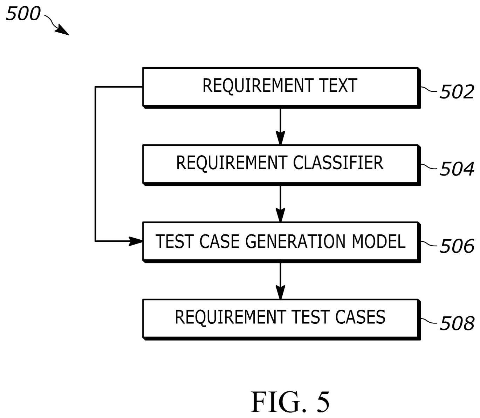

Further referring to FIG. 5, a system 500 is shown in accordance with some approaches. It is generally contemplated that the system 500 may utilize the apparatus 100, components of the apparatus 100, and/or may include steps of the method 200 described herein. For example, the requirement text 502 may be the same as the textual requirements 106, and no further elaboration of repeated components is required. In some aspects, the system 300 and/or the system 400 are the same as the test case generation model 506.

By one approach, the requirement text 502 is classified into an appropriate requirement type category (for example, initialization, adjustment, constants, AND, OR, IF-THEN, latches, timers, and so forth) by a requirement classifier 504. The requirement classifier 504 may use syntactic patterns to generate feature vectors and unsupervised clustering methods to classify the requirement text 502. The requirement type category output from the requirement classifier 504 along with the requirement text 502 may then be processed by a test case generation model 506 (for example, the first machine learning model 108, 304, the second machine learning model 110, 308, and/or any alternate and/or additional machine learning models) to generate requirement test cases 508 (in other words, the test cases 112, 312, 408).

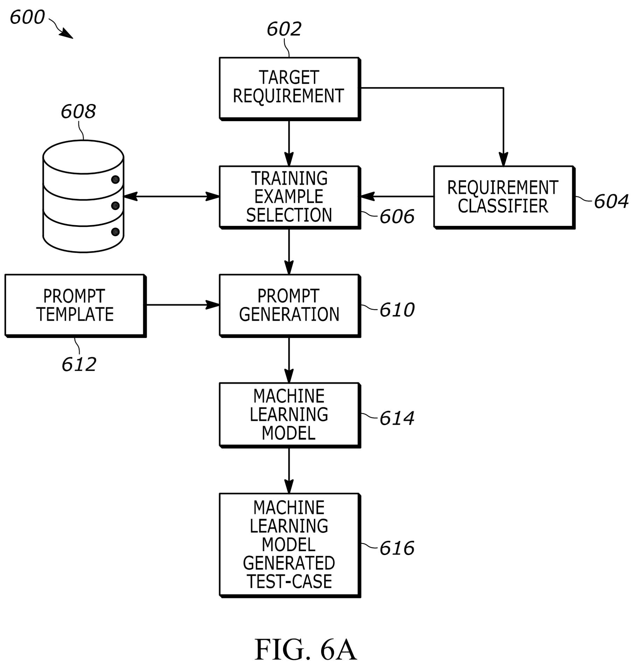

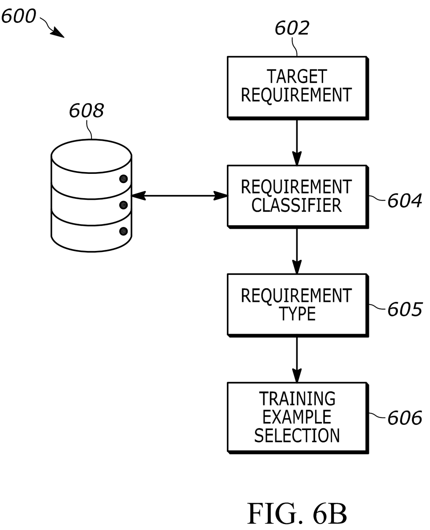

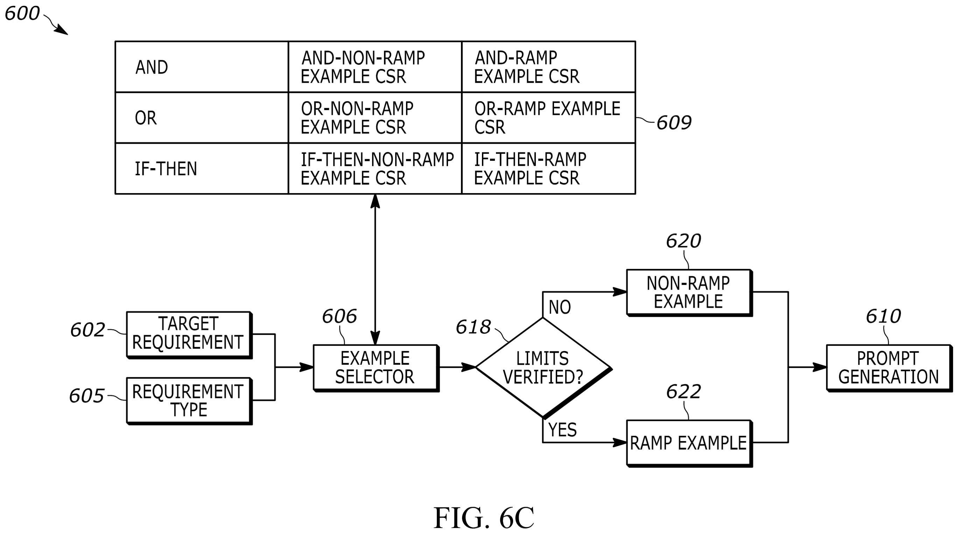

Further referring to FIGS. 6A, 6B, and 6C, a system 600 is shown in accordance with some approaches. FIG. 6A shows a machine learning model test case generator in accordance with some approaches, FIG. 6B shows a requirement classifier of the machine learning model test case generator in accordance with some approaches, and FIG. 6C shows an intelligent training example selection flow of the machine learning model test case generator in accordance with some approaches. In some aspects, the system 600 is the same as the apparatus 100, systems 300, 400, 500, and/or components thereof and/or executes steps of the method 200. It is generally understood that no further elaboration of repeated components is required.

As shown in FIG. 6A, training examples may be leveraged in prompts for machine learning models to learn from in real-time. A target requirement 602 is input into a requirement classifier 604 (for example, the requirement classifier 504) and is input into an example training selection model 606. Further referring to FIG. 6B, the requirement classifier 604 may be operably coupled with at least one database 608 and may process the target requirement 602 along with data in the database 608 (which may include requirement types, associated sample requirements, specific keywords associated with each type, and so forth) to extract a requirement type 605 (such as initialization, adjustment, constants, AND, OR, IF-THEN, latches, timers, and so forth). Thus, the requirement type 605 may specify a logical operation and/or an input variable manipulation associated with a textual requirement specified by the target requirement 602. The logical operation and/or input variable manipulation may include an initialization operation, an adjustment operation, a constant operation, an AND operation, an OR operation, an IF-THEN operation, a latch operation, a timer operation, and/or another type of operation. Some specific illustrative examples are provided in further detail herein. By one approach, the requirement classifier 604 determines the presence of specific keywords and/or the highest text similarity score of the target requirement 602 with sample requirements. In some forms, target requirement 602 may be clustered prior to being input into the requirement classifier 604. In some aspects, the requirement type 605 is provided to the training selection model 606 (also referred to herein as an example selector and/or selector) along with the target requirement 602. In some embodiments, the training selection model 606 includes any suitable machine readable instructions, software, machine learning models, and so forth. In some aspects, the training selection model 606 checks for the presence of specific keywords (such as "above", "below", "greater", "less", "latched", "for a duration of", and so forth) in the requirement text. In some aspects the requirement text (also referred to as textual requirements) includes the target requirement 602, the requirement type, and/or the requirement class described herein.

As shown in FIGS. 6A and 6C, the training selection model 606 may be operably coupled with at least one database 608. In some aspects, the database 608 coupled to the requirement classifier 604 shown in FIG. 6A is the same as the database 608 coupled to the training selection model 606 shown in FIG. 6B, while in some aspects at least one distinct database 608 is coupled to each of the requirement classifier 604 and the training selection model 606. It is generally contemplated that the database(s) 608 include any suitable databases such as suitable databases including hierarchical databases, relational databases, non-relational databases, object oriented databases, and so forth.

In some implementations, a first machine learning model may include the training selection model 606 and the prompt generation model 610 and a second machine learning model may include the machine learning model 614 that generated the test case. Thus, the first machine learning model may select an example from the database 608, select the prompt template 612 based on the requirement type for the textual requirement determined by the requirement classifier 604, and populate the selected prompt template 612 with the selected example and the textual requirement to generate a prompt. The first machine learning model may then provide the generate prompt as input into the machine learning model 614 and the machine learning model 614 may generate the machine learning model generated test case 616 based on the inputted prompt.

As shown in FIG. 6C, the training selection model 606 receives the target requirement 602, the requirement type 605, and training data 609 (for example, requirement and test case training examples) from the database 608. In some examples, the training data 609 may include various conditional examples (for example, AND, OR, IF-THEN, and so forth) for non-RAMP and RAMP (in other words ramped and non-ramped signals) class examples. The illustrative example generally utilizes properties of a signal (such as a continuous signal) and a function which necessitate verbiage to clarify an intended test case approach to be taken. Based on the conditional examples, the training selection model 606 may determine if the limits (for example, the limits indicated in the training data 609) are verified 618 based on the target requirement 602 and the requirement type 605. If the limits are verified, the training selection model 606 determines that the target requirement 602 and the requirement type 605 are associated with a RAMP example 622. If the limits are not verified, the training selection model 606 determines that the target requirement 602 and the requirement type 605 are associated with a non-RAMP example 620.

By one approach, such as in the present RAMP example, when a continuous signal is being compared with a threshold, the input signal needs to be ramped continuously from below to above the threshold for complete validation. By one approach, if the function operates as a latch, the latch output needs to be false before the input conditions set the latch to true, and after the latch is set, the input conditions need to be reset while the latch is at true. In other words, the illustrative example shown may be a way to sub-classify a target requirement 602 and requirement type 605 based on signal and/or function properties.

The output of the training selection model 606 is generally provided to a prompt generation component 610 (which may be the aforementioned prompt generation model 404). In some aspects, dependent on if the target requirement 602 and requirement type 605 are associated with a non-RAMP example 620 or a RAMP example 622, the prompts generated by the prompt generation component 610 are generated respective to the type of example. In other words, a prompt generated for a non-RAMP example 620 may be different than a prompt generated for a RAMP example 622. As shown in FIG. 6A, the prompt generation component 610 may receive a prompt template 612. In some aspects, the prompt template 612 varies depending on if the target requirement 602 and the requirement type 605 is associated with a non-RAMP example 620 or a RAMP example 622. By one approach, the prompt template 612 can be a template populated by the prompt generation component 610 with information associated with the target requirement 602. The prompt generation component 610, by one approach, can generally output a completed prompt to a machine learning model 614.

Thus, for example, selecting the example from the database 608 may include determining that the selected example includes a verification of a limit and designating the textual requirement and the determined requirement type as being associated with a ramped signal based on determining that the selected example includes the verification of the limit. Selecting the prompt template may then include selecting a prompt template associated with a ramped signal, based on designating the textual requirement and the determined requirement type as being associated with the ramped signal. As another example, selecting the example from the database 608 may include determining that the selected example does not include a verification of a limit and designating the textual requirement and the determined requirement type as being associated with a non-ramped signal based on determining that the selected example does not include the verification of the limit. Selecting the prompt template may then include selecting a prompt template associated with a non-ramped signal, based on designating the textual requirement and the determined requirement type as being associated with the non-ramped signal.

In some aspects, the machine learning model 614 receives a prompt from the prompt generation component 610 and processes the prompt to generate a machine-learning model generated test case 616 (such as the aforementioned test cases 112, 312, 408). It is generally contemplated that the machine learning model 614 may be the same as the machine learning models 108, 110, 304, 308, 406, 506 described herein.

In one example, a target requirement 602 may be "The KO validated value shall be initialized to 0 units", and the associated requirement type 605 is initialization. The generated test case 616 may include an input condition of "controller is initialized" and an expected result of "K0 is initialized to 0."

In another example, the target requirement 602 may be "The controller shall set a fault when all of the following are true: 1. Aircraft is on ground. 2. Engine state is OFF. Otherwise, the fault is reset", and the associated requirement type 605 is AND. The generated test cases 616 may include a first test case 616 with an input condition of "Aircraft is on ground, Engine state is OFF" and an expected result of "Fault detected". A second test case 616 may have an input condition of "Aircraft is in air, Engine state is OFF" and an expected result of "Fault is not detected". A third test case 616 may have an input condition of "Aircraft is on ground, Engine state is ON" and an expected result of "Fault is not detected". A fourth test case 616 may have an input condition of "Aircraft is in air, Engine state is ON" and an expected result of "Fault is not detected".

In another example, the target requirement 602 may be "The controller shall detect a fault when Altitude is greater than 100,000 feet", and the associated requirement type 605 is Continuous Signals. The generated test case 616 may include an input condition of "Altitude is varied from lower than to greater than 100,000 feet" and an expected result of "Fault is detected when altitude is greater than 100,000 feet".

In another example, the target requirement 602 may be "The controller shall set a fault when all of the following are true: 1. Aircraft is on ground. 2. Engine state is OFF. 3. Altitude is greater than 100,000 feet. Otherwise, the fault is reset" and the associated requirement type 605 is AND and Continuous Signal. The generated test cases 616 may include a first test case 616 with an input condition of "Aircraft is on ground, Engine state is OFF, Altitude is varied from lower than to greater than 100,000 feet" and an expected result of "Fault detected when altitude is greater than 100,000 feet". A second test case 616 may have an input condition of "Aircraft is in air, Engine state is OFF, Altitude is varied from lower than to greater than 100,000 feet" and an expected result of "Fault is not detected". A third test case 616 may have an input condition of "Aircraft is on ground, Engine state is ON, Altitude is varied from lower than to greater than 100,000 feet" and an expected result of "Fault is not detected". A fourth test case 616 the input condition may be "Aircraft is in air, Engine state is ON, Altitude is varied from lower than to greater than 100,000 feet" and an expected result is "Fault is not detected".

In another example, the target requirement 602 may be "The controller shall latch (set and hold) on-ground detection to true when weight wheels is true. The controller shall unlatch (clear a latch) on-ground detection to false when weight on wheels is false and airspeed is greater than 100 units". The generated test cases 616 may include a first test case 616 with an input condition of "Weight on wheels transitions from false to true" and an expected result of "On-ground detection transitions to true when weight on wheels is true". A second test case 616 may have an input condition of "On-ground detection is true, Weight on wheels is false, Airspeed is ramped from less than to greater than 100 units", and an expected result of "On-ground detection transitions from true to false when airspeed is greater than 100 units". A third test case 616 may have an input condition of "On-ground detection is true, Weight on wheels is true, Airspeed is greater than 100 units", and an expected result is "On-ground detection remains true".

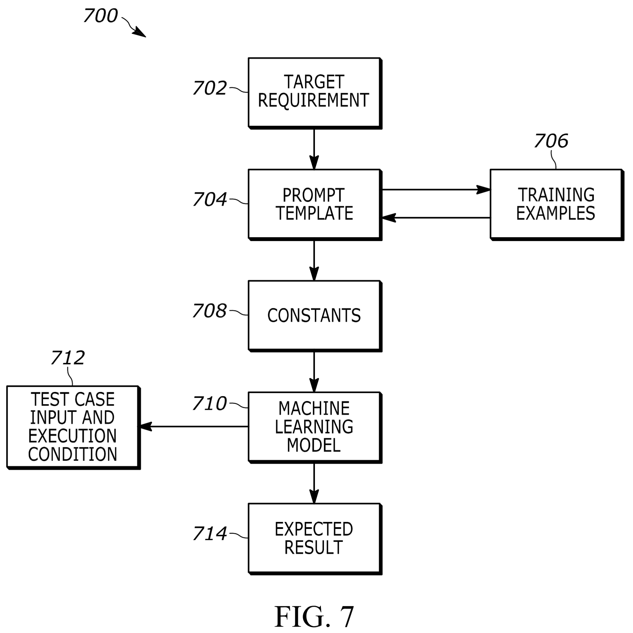

Further referring to FIG. 7, a system 700 is shown in accordance with some embodiments. The system 700 shows an example of prompt generation and test case generation in accordance with the present teachings. In some aspects, the system 700 is the same as the apparatus 100, systems 300, 400, 500, 600, and/or components thereof and/or executes steps of the method 200. It is generally understood that no further elaboration of repeated components is required.

As shown, a target requirement 702 (which may be the same as the target requirement 602, the requirement text 502, and/or the textual requirements 106, 302) is input into a prompt template 704 (which may be the prompt template 612). Generally, the prompt template 704 is populated with training examples 706 which are fed back into the prompt template 704. The filled-out prompt template 704 may be for a designated requirement type, which in the illustrative example is constants 708, and can be input into the machine learning model 710. The machine learning model 710 then processes the prompt template 704 populated with the target requirement 702 and training examples 706 and generates test case input and execution conditions 712 and expected results 714. In some aspects the test case input and execution conditions 712 and the expected results 714 when combined make up a test case (such as the test cases 112, 312, 408, 508, 616).

An example target requirement 702 may be "The T1 temperature converted signal adder adjustable shall be set to 0." An example prompt template 704 may be "You will be given a requirement text for which you need to create a test case. The test case will be in the form of <"Input, Execution Condition", "Expected Result">. I will give an example requirement for which I will provide the expected output. <Insert Training Example> Now do the same for the following results. Present the answer in the same format as shown above. <Insert Target Requirement>". An example training example 706 may be "Example Requirement Text: "The Internal Temperature Measured at CPU sensor validation upper limit shall be 0 degrees Celsius." Example Expected Output: Input, Execution Condition: The Internal Temperature Measured at CPU sensor validation upper limit is observed/reviewed. Expected Result: The Internal Temperature Measure at CPU sensor validation upper limit is set to 0 degrees Celsius".

The requirement type of constants 708 in the present example may be "You will be given a requirement text for which you need to create a test case. The test case will be of the form <"Input, Execution Condition", "Expected Results">. I will give an example requirement for which I will provide the expected output. Example Requirement Text: "The Internal Temperature Measured at CPU sensor validation upper limit shall be 0 degrees Celsius." Example Expected Output: Input, Execution Condition: The Internal Temperature Measured at CPU sensor validation upper limit is observed/reviewed. Expected Result: The Internal Temperature Measure at CPU sensor validation upper limit is set to 0 degrees Celsius. Now do the same for the following result. Present the answer in the same format as shown above. Requirement Text: "The T1 temperature converted signal adder adjustable shall be set to 0."

In the present example, the test case input and execution conditions 712 output from the machine learning model 710 may be "Input, Execution Condition: The T1 Temperature converted signal adjustable adder is observed/reviewed" and the expected result 714 output from the machine learning model 710 may be "Expected Result: The T1 Temperature converted signal adjustable adder is set to 0".

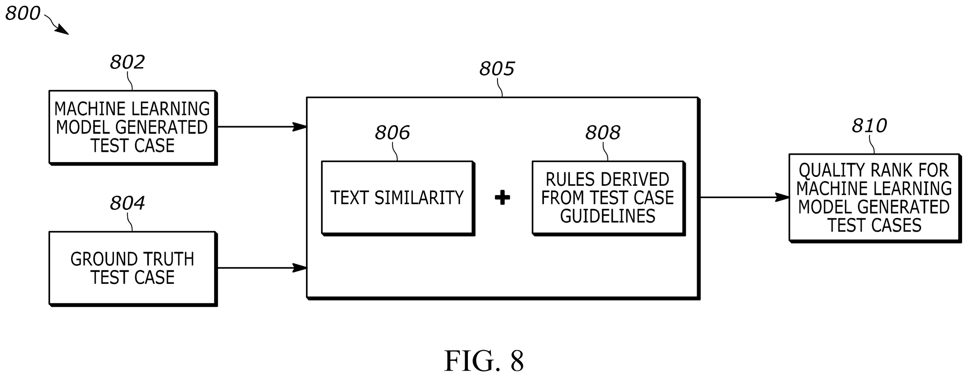

Further referring to FIG. 8, a system 800 is shown in accordance with these teachings. The system 800 is an evaluation framework (for example, for machine learning model generated test cases) in accordance with the present teachings. In some aspects, the system 800 is the same as the apparatus 100, systems 300, 400, 500, 600, 700 and/or components thereof and/or executes steps of the method 200. It is generally understood that no further elaboration of repeated components is required. Generally, a machine learning model generated test case 802 (such as the test cases 112, 312, 408, 508, 616) and a ground truth test case 804 (for example, a baseline manually generated test case known to be accurate) are input into an evaluation model 805. The evaluation model 805 may account for text similarity 806 and rules derived from test case guidelines 808. The evaluation model 805 outputs a quality rank 810 (for example, from 1-3, 0-1, 0%-100%, and so forth) for the machine learning model generated test cases 802. The system 800 may assist in comparing different methods of generating machine learning model generated test cases 802 by ranking the quality of the machine learning model generated test cases 802.

Thus, the system 800 may select a ground truth test case associated with a textual requirement, wherein the ground truth test case is designated as an accurate test case for the textual requirement, input the generated test case for the textual requirement and the selected ground truth test case into the evaluation model 805, and determine, by the evaluation model 805, the quality rank 810 for the generated test case based on the inputted generated test case and selected ground truth test case.

Referring to the example target requirement 702 described relative to FIG. 7, the evaluation model 805 may compare a machine learning model generated test case 802 of "Input, Execution Condition: The T1 Temperature Converted signal adjustable adder is observed/reviewed. Expected Result: The T1 Temperature Converted signal adjustable adder is set to 0" and a ground truth test case 804 of "Input, Execution Condition: T1 Temperature Converted signal adjustable adder is observed/reviewed. Expected Result: T1 Temperature Converted signal adjustable adder is set equal to 0". Based on the text similarity 806 and the rules derived from test case guidelines 808, the machine learning model generated test case 802 can be ranked accordingly. By utilizing a rule-based evaluation in addition to text similarity, the evaluation model 805 is able to reduce false positives/negatives in accordance with these teachings.

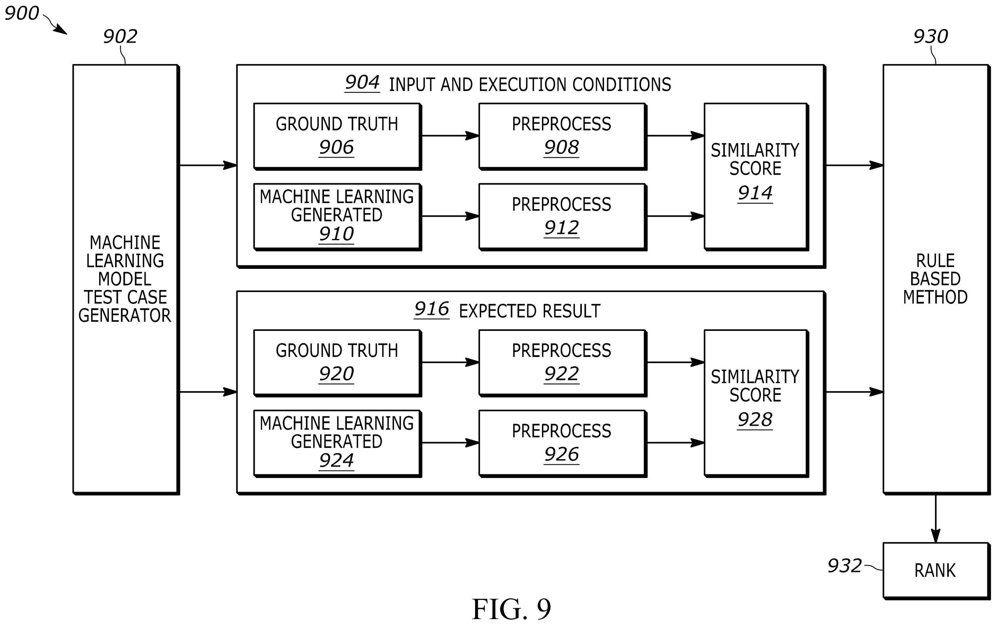

Further referring to FIG. 9, a system 900 is shown in accordance with some embodiments. The system 900 may be a ranking approach in accordance with the present teachings. In some aspects, the system 900 is the same as the apparatus 100, systems 300, 400, 500, 600, 700, 800 and/or components thereof and/or executes steps of the method 200. It is generally understood that no further elaboration of repeated components is required.

Thus, the system 900 may, in determining the quality rank for a generated test case, determine a first similarity score between, on the one hand, the specified test case input and one or more execution conditions of the generated test case and, on the other hand, a ground truth test case input and a ground truth one or more execution conditions of a ground truth test case, determine a second similarity score between the expected test results of the generated test case and ground truth expected test results of the selected ground truth test case, and determine the quality rank for the generated test case based on the first similarity score and the second similarity score.

As shown, a machine learning model test case generator 902 outputs input and execution conditions 904 and expected results 916. The input and execution conditions 904 include a ground truth input and execution conditions 906 and a machine learning generated input and execution conditions 910. The ground truth and machine learning generated input and execution conditions 906, 910 are each preprocessed 908, 912, respectively (which may include removing punctuation, special characters, stop words, and so forth) before a similarity score 914 is generated. The expected result 916 includes a ground truth expected result 920 and a machine learning generated expected result 924. The ground truth and machine learning generated expected result 920, 924 are each preprocessed 922, 926, respectively (which may include removing punctuation, special characters, stop words, and so forth) before a similarity score 928 is generated. The similarity score 914 (comparing the ground truth and machine learning generated input and execution conditions 906, 910) and the similarity score 928 (comparing the ground truth and machine learning generated expected results 920, 924) are both input into a rules-based ranking method 930 and a rank 932 of a machine learning model generated test case (such as test cases 112, 312, 408, 508, 616, 802) is determined. In some aspects the similarity scores 914, 928 are generated using a Cosine and/or Dice similarity method.

In some aspects, the ranking method 930 can utilize Rank and Cosine similarity which is calculated for input and execution conditions 904 and expected result 916 as:
$S = cosine \left(ground_truth,machine_learning_generated\right)$$R = \left\{\begin{matrix}1 , & S > t 1 \\ 2 , & t 2 < S \leq t 1 \\ 3 , & S < t 2\end{matrix}\right.$

There may be a penalty of p = +/-*t*3 based on presence or absence of specific keywords based on guidance (such as the rules derived from test case guidelines 808). By one approach, t1 may be "0.8", t2 may be "0.5", and t3 may be "0.5".

Ranking for a test case may be:
$Rank , ℝ = round \left\{max\left({R}_{IEC}, {R}_{ER}\right)+p\right\} , ℝ ∈ \left\{1, 2, 3\right\}$

1 → *Good, 2* → *Intermediate* & 3 → *Bad*

In one example, a requirement type (such as the requirement type 605) may be "The ABC Model Band Lower Limit shall be set to the ABC Model Selected value -1% (adjustable)". Further, a ground truth input and execution condition 906 may be "The ABC Model Band Lower Limit is observed/reviewed" and the machine learning generated input and execution condition may be "ABC Model Band Lower Limit Adjustable Parameter is reviewed and updated". The generated similarity score 914 may be "0.5479". Further, a ground truth expected result 920 may be "The ABC Model Band Lower Limit is set to the N2 Model Selected value -1% (adjustable)" and the machine learning generated expected result 924 may be "ABS Model Band Lower Limit is set equal to N2 Model Selected value -1%". The similarity score 928 may be "0.9008". The rule based ranking method 930 may determine a base rank of "2", and penalty of "0.5" may be determined (for example, due to a rule that the input and execution conditions 904 should contain the phrase "observed/reviewed") making the final rank 932 "3".

It is generally understood that any alternate equations for and/or methods of ranking the quality of the machine learning model generated test cases may be used and that the described equations are for example only.

Pursuant to present teachings, current methods of test case generation for requirements engineering processes are manual, cumbersome, can be inaccurate, and require significant amounts of time. These are all significant challenges in the context of aviation application settings. Generally speaking, various aspects of the present teachings can be employed with systems, methods, apparatuses, and the like to facilitate automatically generating test cases for aviation software. By one approach, the present teachings provide an automated solution to author test cases by parsing natural language requirements written in English using Al models fine-tuned to automatically identify a requirement type, to extract input and execution conditions from requirement text, and to extract expected results from requirement text. Specifically, the automated aspects described improve accuracy and decrease the time and complexity required during test case generation.

Further aspects of the disclosure are provided by the subject matter of the following clauses:
A method to generate test cases for aviation software, the method comprising:
accessing a textual requirement for the aviation software; determining a requirement type for the textual requirement using a requirements classifier, wherein the requirement type specifies at least one of a logical operation or an input variable manipulation associated with the textual requirement; selecting, by a first machine learning model, a prompt template based on the determined requirement type;
selecting, by the first machine learning model, an example from an example database based on the determined requirement type; populating, by the first machine learning model, the selected prompt template with the selected example and with the textual requirement; providing, by the first machine learning model, the populated prompt template as a prompt to a second machine learning model; and generating, by the second machine learning model, a test case for execution by the aviation software based on the provided populated prompt, wherein the test case includes a specified test case input, one or more execution conditions, and expected test results for the specified test case input and the one or more execution conditions.

The method of any preceding clause, wherein selecting, by the first machine learning model, the example from the example database based on the determined requirement type includes: determining that the selected example includes a verification of a limit; designate the textual requirement and the determined requirement type as being associated with a ramped signal based on determining that the selected example includes the verification of the limit; and wherein selecting, by the first machine learning model, the prompt template based on the determined requirement type includes selecting a prompt template associated with a ramped signal, based on designating that the textual requirement and the determined requirement type as being associated with the ramped signal.

The method of any preceding clause, wherein selecting, by the first machine learning model, the example from the example database based on the determined requirement type includes: determining that the selected example does not include a verification of a limit; designate the textual requirement and the determined requirement type as being associated with a non-ramped signal based on determining that the selected example includes the verification of the limit; and wherein selecting, by the first machine learning model, the prompt template based on the determined requirement type includes selecting a prompt template associated with a non-ramped signal, based on designating that the textual requirement and the determined requirement type as being associated with the non-ramped signal.

The method of any preceding clause, further comprising: selecting a ground truth test case associated with the textual requirement, wherein the ground truth test case is designated as an accurate test case for the textual requirement; inputting the generated test case and the selected ground truth test case into an evaluation model; and determining, by the evaluation model, a quality rank for generated test case based on the inputted generated test case and selected ground truth test case.

The method of any preceding clause, wherein determining, by the evaluation model, the quality rank for generated test case based on the inputted generated test case and selected ground truth test case includes: determining a first similarity score between the specified test case input and one or more execution conditions of the generated test case and a ground truth test case input and a ground truth one or more execution conditions of the selected ground truth test case; determining a second similarity score between the expected test results of the generated test case and ground truth expected test results of the selected ground truth test case; and determining the quality rank for the generated test case based on the first similarity score and the second similarity score.

The method of any preceding clause, wherein determining the quality rank for the generated test case based on the first similarity score and the second similarity score includes at least one of Cosine similarity or Dice similarity.

The method of any preceding clause, wherein the requirement type includes at least one of an initialization operation, an adjustment operation, a constant operation, an AND operation, an OR operation, an IF-THEN operation, a latch operation, a timer operation, and/or another type of operation.

The method of any preceding clause, further comprising: executing the generated test case by the aviation software; obtaining results based on executing the generated test case by the aviation software; and determining whether the textual requirement for the aviation software is satisfied based on the obtained results.

A method to facilitate automatically generating test cases for aviation software, the method comprising: by a control circuit: accessing textual requirements for the aviation software; determining requirement types for the textual requirements using a requirements classifier, wherein particular ones of the requirement types specify a logical operation or input variable manipulation associated with a textual requirement; inputting the textual requirements and the determined requirement types for the aviation software to a first machine learning model; outputting test case input and execution conditions from the first machine learning model based on the inputted textual requirements and requirement types; inputting the textual requirements and the test case input and execution conditions to a second machine learning model that is different from the first machine learning model; outputting expected test results from the second machine learning model; forming at least one test case for the aviation software using the test case input, execution conditions, and expected test results; outputting the at least one test case for execution by the aviation software.

The method of any preceding clause, further comprising, by the control circuit, executing the at least one test case.

The method of any preceding clause, wherein the first machine learning model comprises a general large language model that has been fine-tuned using existing test cases for aviation software.

The method of any preceding clause wherein the general large language model has been fine-tuned by selectively modifying weighting of particular input/output combinations.

The method of any preceding clause wherein one or more of the generated test cases for aviation software comprise test cases that are vetted and approved as complying with at least one test case requirement.

The method of any preceding clause wherein the at least one test case requirement comprises a governmental-sourced test case requirement.

The method of any preceding clause wherein the governmental-sourced test case requirement comprises an aerospace industry certification requirement.

The method of any preceding clause wherein the second machine learning model comprises a general large language model that has been fine-tuned to account for a context of testing conditions.

The method of any preceding clause wherein the second machine learning model comprises a general large language model that has been fine-tuned to ensure that output expected test results accord with output expected results from test cases used to further train the second machine learning model.

The method of any preceding clause wherein the textual requirements comprise at least five hundred different and discrete requirements for the aviation software.

The method of any preceding clause wherein the aviation software comprises engine control software.

An apparatus to facilitate automatically generating test cases for aviation software, the apparatus comprising: a control circuit configured to: access textual requirements for the aviation software; input the textual requirements for the aviation software to a first machine learning model; output test case input and execution conditions from the first machine learning model; input the textual requirements and the test case input and execution conditions to a second machine learning model that is different from the first machine learning model; output expected test results from the second machine learning model; and form at least one test case for the aviation software using the test case input, execution conditions, and expected test results.

An apparatus to facilitate automatically generating test cases for aviation software, the apparatus comprising: a control circuit configured to: access textual requirements for the aviation software; determine requirement types for the textual requirements using a requirements classifier, wherein particular ones of the requirement types specify a logical operation or input variable manipulation associated with a textual requirement; input the textual requirements and the determined requirement types for the aviation software to a first machine learning model; output test case input and execution conditions from the first machine learning model based on the inputted textual requirements and requirement types; input the textual requirements and the test case input and execution conditions to a second machine learning model that is different from the first machine learning model; output expected test results from the second machine learning model; form at least one test case for the aviation software using the test case input, execution conditions, and expected test results; and output the at least one test case for execution by the aviation software.

The apparatus of any preceding clause, wherein the first machine learning model comprises a general large language model that has been fine-tuned using existing test cases for aviation software.

The apparatus of any preceding clause wherein the general large language model has been fine-tuned by selectively modifying weighting of particular input/output combinations.

The apparatus of any preceding clause wherein at least some of the existing test cases for aviation software comprise test cases that were vetted and approved as complying with at least one test case requirement.

The apparatus of any preceding clause wherein the at least one test case requirement comprises a governmental-sourced test case requirement.

The apparatus of any preceding clause wherein the governmental-sourced test case requirement comprises an aerospace industry certification requirement.

The apparatus of any preceding clause wherein the second machine learning model comprises a general large language model that has been fine-tuned to account for a context of testing conditions.

The apparatus of any preceding clause wherein the second machine learning model comprises a general large language model that has been fine-tuned to ensure that output expected test results accord with output expected results from test cases used to further train the second machine learning model.

The apparatus of any preceding clause wherein the textual requirements comprise at least five hundred different and discrete requirements for the aviation software.

The apparatus of any preceding clause wherein the aviation software comprises engine control software.

## Claims

1. A method to facilitate automatically generating test cases for aviation software (104), the method comprising:
by a control circuit (102):
accessing textual requirements (106) for the aviation software;
inputting the textual requirements for the aviation software (104) to a first machine learning model (108).
outputting test case input and execution conditions from the first machine learning model;
inputting the textual requirements and the test case input and execution conditions to a second machine learning model (110) that is different from the first machine learning model;
outputting expected test results from the second machine learning model;
forming at least one test case (112) for the aviation software using the test case input, execution conditions, and expected test results; and
outputting the at least one test case for execution.

2. An apparatus to facilitate automatically generating test cases for aviation software (104), the apparatus comprising:
a control circuit (102) configured to:
access textual requirements (106) for the aviation software (104);
input the textual requirements for the aviation software to a first machine learning model (108);
output test case input and execution conditions from the first machine learning model;
input the textual requirements and the test case input and execution conditions to a second machine learning model (110) that is different from the first machine learning model;
output expected test results from the second machine learning model;
form at least one test case (112) for the aviation software using the test case input, execution conditions, and expected test results; and
output the at least one test case for execution.

3. Either of claims 1 or 2, further comprising:
by the control circuit (102):
executing the at least one test case (112).

4. Any of claims 1 through 3, wherein the first machine learning model (108) comprises a general large language model that has been fine-tuned using existing test cases for aviation software.

5. Claim 4 wherein the general large language model has been fine-tuned by selectively modifying weighting of particular input/output combinations.

6. Claim 4 or 5 wherein at least some of the existing test cases for the aviation software (104) comprise test cases that were vetted and approved as complying with at least one test case requirement.

7. Claim 6 wherein the at least one test case requirement comprises a governmental-sourced test case requirement.

8. Claim 7 wherein the governmental-sourced test case requirement comprises an aerospace industry certification requirement.

9. Any of claims 1 through 8 wherein the second machine learning model (110) comprises a general large language model that has been fine-tuned to account for a context of testing conditions.

10. Any of claims 1 through 9 wherein the second machine learning model (110) comprises a general large language model that has been fine-tuned to ensure that output expected test results accord with output expected results from test cases used to further train the second machine learning model.

11. Any of claims 1 through 10 wherein the textual requirements (106) comprise at least five hundred different and discrete requirements for the aviation software (104).

12. Any of claims 1 through 11 wherein the aviation software (104) comprises engine control software.
